# EUROPEAN PATENT SPECIFICATION

(11) **EP 4 254 128 B1**
(45) Date of publication and mention of the grant of the patent: **30.07.2025**
(21) Application number: 21901093.1
(22) Date of filing: 03.12.2021
(51) Int. Cl.: G06F 1/16, H02K 11/25, H02P 29/60, G09F 9/30

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE À AFFICHAGE FLEXIBLE

(30) Priority: 03.12.2020 KR 20200167853; 02.07.2021 KR 20210087378
(43) Date of publication of application: 04.10.2023
(73) Proprietor: Samsung Electronics Co., Ltd., Suwon-si, Gyeonggi-do 16677 (KR)
(72) Inventor: AN, Jungchul, Suwon-si Gyeonggi-do 16677 (KR); KANG, Jooyoung, Suwon-si Gyeonggi-do 16677 (KR); SONG, Kwonho, Suwon-si Gyeonggi-do 16677 (KR)
(74) Representative: HGF
(86) International application number: PCT/KR2021/018289
(87) International publication number: WO 2022/119405

(56) References cited:
- WO-A1-2019/153818
- WO-A1-2020/209425
- WO-A1-2020/211948
- KR-A- 20150 134 262
- KR-A- 20170 116 551
- KR-B1- 101 993 390
- KR-B1- 102 066 569
- KR-B1- 102 111 376
- US-A1- 2019 268 455
- US-A1- 2020 348 727

## Description

### [Technical Field]

Various embodiments of the disclosure relate to an electronic device including a flexible display.

### [Background Art]

Due to the development of information and communication technology and semiconductor technology, various functions are being integrated into a single portable electronic device. For example, an electronic device may implement various functions, such as an entertainment function (e.g., a game function), a multimedia function (e.g., a music/video replay function), a communication and security function for mobile banking or the like, a schedule management function, and an e-wallet function, in addition to a communication function. Such an electronic device has been downsized to be conveniently carried by a user.

A flexible display has a screen that may be curved or flattened by winding, folding, or bending a panel. The flexible display may be implemented as a rollable display, a bendable display, a foldable display, a slidable display, or the like. An electronic device including such a flexible display may be applied not only to a mobile device such as a smartphone or a tablet PC, but also to a TV, an automobile display, a wearable device, or the like, and its application fields are expanding.

### [Detailed Description of the Invention]

### [Technical Problem]

An electronic device (e.g., a portable terminal) includes a display having a flat surface or a display having a flat surface and a curved surface. An electronic device including a display may have a limitation in implementing a screen larger than the size of the electronic device due to a fixed display structure. Therefore, foldable or rollable electronic devices are being researched.

In implementing a rollable electronic device, as housings of the electronic device become movable (e.g., slidable) relative to each other and a flexible display becomes slidable, the flexible display may include a rolling section and a flat section. This is exemplified by WO 2019/153818 A1.

According to various embodiments of the disclosure, in a flexible display, a glass substrate or a high-hardness substrate may be replaced with a flexible film that is foldable/unfoldable. By using the film as the substrate, the flexible display is advantageous in that it is thin, light, strong against impact, and foldable/unfoldable. The flexible display has a structure in which a film is stacked on a display. In particular, as the use environment, auxiliary environment, manufacturing environment, and the like of the flexible display become more diverse and harsher, a film having an excellent recovery characteristic and maintaining a viscoelastic property in a wide temperature range is required.

In implementing a slidable electronic device capable of performing a sliding motion, it is necessary to control the sliding motion depending on a specific condition encountered by the flexible display.

The flexible display may form a curved surface or a flat surface in a rolling section and a flat section, and its shape may change frequently while sliding. At this time, physical properties of the flexible display may be affected by the surrounding environment.

In the slidable electronic device according to the disclosure, it may be necessary to control the motor output according to a specific condition in order to provide a stable sliding motion.

According to various embodiments of the disclosure, it is possible to provide an electronic device in which a sliding motion is provided in consideration of the repulsive force of a flexible display.

According to various embodiments of the disclosure, it is possible to provide an electronic device including a motor that is controlled according to a specific condition considering the environment around the electronic device or the flexible display.

### [Technical Solution]

According to various embodiments of the disclosure, an electronic device includes housings including a first housing and a second housing configured to accommodate at least a portion of the first housing and guide a sliding movement of the first housing, a flexible display including a first display area connected to the first housing and a second display area extending from the first display area, a roller disposed inside the second housing and configured to move the flexible display, a motor configured to rotate the roller, and a support member configured to support at least a portion of the flexible display in the second display area. The motor is configured such that an output of the motor is determined according to the one-state holding time of the flexible display in an opened state or a closed state of the electronic device. Also disclosed are circumstances where the motor is configured such that an output of the motor is determined according additionally or alternatively to at least one of the shape change and the temperature.

According to various embodiments, in the electronic device, the second display area may include a (2-1)^{th} area in which the flexible display is capable of forming a curved surface with the roller, and a (2-2)^{th} area which is connected to the (2-1)^{th} area and in which the flexible display forms a flat surface, the (2-1)^{th} area may be flattened by the opening or closing movement of the flexible display, and the (2-2)^{th} area may form a curved surface by the opening movement of the flexible display.

### [Advantageous Effects]

The slidable electronic device according to various embodiments of the disclosure is capable of continuously increasing an output of a motor according to a specific condition of the flexible display.

The slidable electronic device according to various embodiments of the disclosure is capable of allowing the flexible display to move at a constant speed by controlling the motor output when the flexible display moves.

The slidable electronic device according to various embodiments of the disclosure is capable of controlling the motor output in consideration of the repulsive force or stress of the flexible display when the flexible display moves under a specific condition.

### [Brief Description of Drawings]

FIG. 1 is a view illustrating a state in which a second display area of a flexible display according to various embodiments of the disclosure is accommodated in a second housing.
FIG. 2 is a view illustrating a state in which the second display area of the flexible display according to various embodiments of the disclosure is exposed to the outside of the second housing.
FIG. 3 is an exploded perspective view of an electronic device according to various embodiments of the disclosure.
FIG. 4 is a cross-sectional view taken along line A-A' in FIG. 2.
FIGS. 5A and 5B are side views illustrating respectively a closed state and an opened state of a slidable electronic device according to various embodiments of the disclosure.
FIG. 6 is a side view illustrating lifting of a flexible display of a slidable electronic device according to various embodiments of the disclosure.
FIG. 7 is a view for describing a difference in repulsive force according to the operation of a slidable electronic device according to various embodiments of the disclosure.
FIG. 8 is a view for describing a difference in repulsive force according to the operation of a slidable electronic device according to various embodiments of the disclosure.
FIGS. 9A, 9B, and 9C are views illustrating the sliding movement of each area of a flexible display in a slidable electronic device according to various embodiments of the disclosure.
FIG. 10 is a diagram illustrating a difference in repulsive force according to a one-state holding time according to an embodiment of the disclosure.
FIG. 11 is a diagram illustrating a motor output according to a one-state holding time according to an embodiment of the disclosure.
FIG. 12 is a diagram comparing motor outputs according to various embodiments of the disclosure.
FIG. 13 is a view illustrating a motor and a driving rail in an electronic device of the disclosure.

### [Mode for Carrying out the Invention]

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

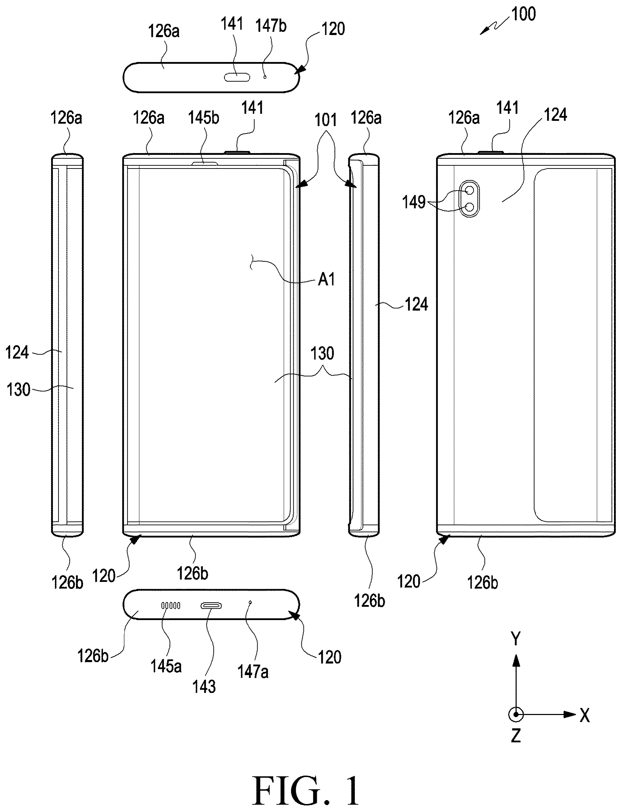

FIG. 1 is a view illustrating a state in which a second display area of a flexible display according to various embodiments of the disclosure is accommodated in a second housing.

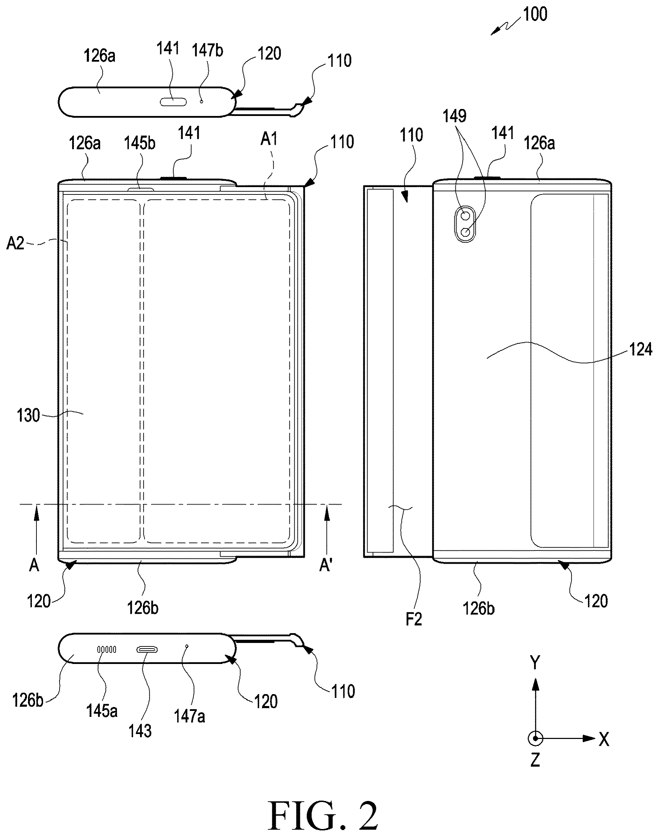

FIG. 2 is a view illustrating a state in which the second display area of the flexible display according to various embodiments of the disclosure is exposed to the outside of the second housing.

The state illustrated in FIG. 1 is defined as the state in which the first housing 110 is closed relative to the second housing 120, and the state illustrated in FIG. 2 is defined as the state in which the first housing 110 is opened relative to the second housing 120. According to an embodiment, the "closed state" or the "opened state" is defined as the state in which the electronic device is closed or the state in which the electronic device is opened.

Referring to FIGS. 1 and 2, an electronic device 100 includes housings 110 and 120 and a flexible display 130 (hereinafter, referred to as a "display"). The housings 110 and 120 include a second housing 120 and a first housing 110 disposed to be movable relative to the second housing 120. In some embodiments, the electronic device 100 may be interpreted as having a structure in which the second housing 120 is disposed to be slidable on the first housing 110. According to an embodiment, the first housing 110 may be disposed to be reciprocable by a predetermined distance in the illustrated direction, for example, a first direction (e.g., the X-axis direction) relative to the second housing 120.

According to various embodiments, the first housing 110 may be referred to as, for example, a first structure, a slide structure, a slide bracket, or a slide housing and may be configured to be reciprocable relative to the second housing 120. According to an embodiment, the second housing 120 may be referred to as, for example, a second structure, a main structure, a base bracket, or a main housing. A portion of the display 130 (e.g., a first display area A1) may be disposed on the first housing 110. According to an embodiment, the second housing 120 may accommodate various electrical and electronic components such as a circuit board and a battery.

According to an embodiment, when the first housing 110 moves (e.g., slides) relative to the second housing 120, another portion of the display 130 (e.g., a second display area A2) is at least partially accommodated inside the second housing 120 (e.g., a slide-in operation) or visually exposed outside the second housing 120 (e.g., a slide-out operation).

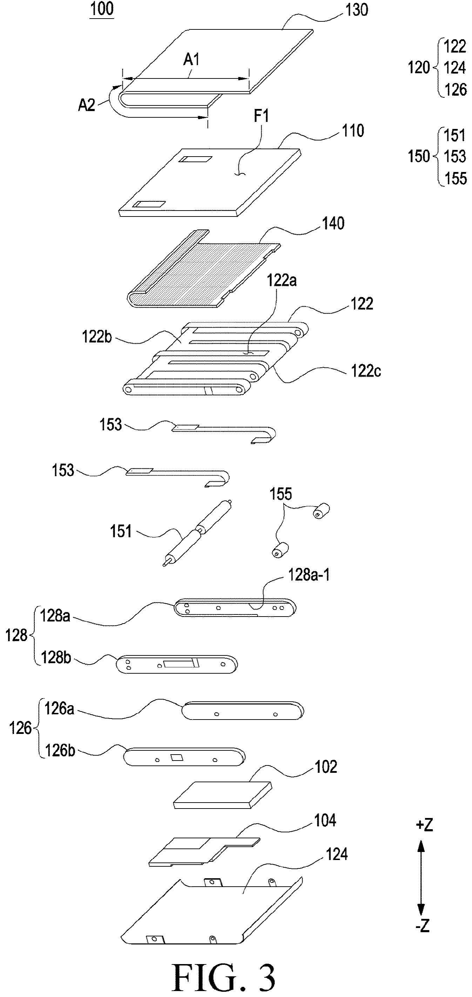

According to various embodiments, the first housing 110 may include a front surface (e.g., the front surface F1 in FIG. 3) facing at least a portion of the display 130 and a rear surface F2 facing a direction opposite to the front surface F1. According to an embodiment, the first housing 110 supports at least a portion of the display 130 (e.g., the first display area A1).

According to various embodiments, the second housing 120 may include a rear surface plate 124. According to an embodiment, the rear surface plate 124 may substantially define at least a portion of the exterior of the second housing 120 or the electronic device 100. According to an embodiment, the rear surface plate 124 may provide a decorative effect on the exterior of the electronic device 100. The rear surface plate 124 may be made of at least one of metal, glass, synthetic resin, or ceramic. According to an embodiment, at least a portion of the rear surface plate 124 (e.g., an auxiliary display area) may be made of a material that transmits light. For example, in the state in which a portion of the display 130 (e.g., the second display area A2) is accommodated inside the electronic device 100, the electronic device 100 may output visual information by using the second display area A2. The auxiliary display area may be a portion of the rear surface plate 124 in which the display 130 accommodated inside the second housing 120 is located.

According to various embodiments, the second housing 120 may include side surface members 126a and 126b. The side surface members 126a and 126b may include a first side surface member 126a and a second side surface member 126b substantially parallel to the first side surface member 126a. According to an embodiment, the first side surface member 126a and the second side surface member 126b may define at least a portion of the exterior of the electronic device 100. According to an embodiment, the side surface members 126a and 126b may include at least one speaker hole 145a or microphone hole 147a or 147b.

According to various embodiments, the second housing 120 accommodates the first housing 110. For example, the first housing 110 may be accommodated in the second housing 120 while being at least partially surrounded by the rear surface plate 124, the first side surface member 126a, and the second side surface member 126b and may slide in a direction parallel to the first surface F1 or the second surface F2, for example, in the first direction (e.g., the X-axis direction) while being guided by the second housing 120.

According to various embodiments, the display 130 includes a first display area A1 and a second display area A2. According to an embodiment, the first display area A1 is disposed on the first housing 110. For example, the first display area A1 may be disposed on the front surface F1 of the first housing 110. The second display area A2 extends from the first display area A1 and is inserted into or accommodated inside the second housing 120 or is exposed outside the second housing 120 according to a sliding movement of the first housing 110.

According to various embodiments, the second display area A2 is moved while substantially being guided by a roller (e.g., the first roller 151 in FIG. 3) mounted in the second housing 120 to be accommodated inside or exposed outside the second housing 120. According to an embodiment, the second display area A2 may be moved based on the sliding movement of the first housing 110 in the first direction (e.g., the direction indicated by arrow ①). For example, while the first housing 110 slides, a portion of the second display area A2 may be deformed into a curved shape at a position corresponding to the first roller 151.

According to various embodiments, when viewed from above the first housing 110 (e.g., in the Z-axis direction), if the first housing 110 moves from the closed state to the opened state, the second display area A2 may form a substantially flat surface with the first display area A1 while being gradually exposed outside the second housing 120. The display 103 may be coupled to or disposed adjacent to a touch detection circuit, a pressure sensor capable of measuring a touch intensity (pressure), and/or a digitizer configured to detect a magnetic field-type stylus pen. In an embodiment, the second display area A2 is at least partially accommodated inside the second housing 120, and even in the state illustrated in FIG. 1 (e.g., the closed state), a portion of the second display area A2 is visually exposed outside. According to an embodiment, irrespective of the closed state or the opened state, a portion of the visually exposed second display area A2 may be located on the roller (e.g., the first roller 151 in FIG. 3), and at a position corresponding to the first roller 151, a portion of the second display area A2 may maintain the curved shape.

According to various embodiments, the electronic device 100 may include a key input device 141, a connector hole 143, audio modules 145a, 145b, 147a, and 147b, or a camera module 149. Although not illustrated, the electronic device 100 may further include an indicator (e.g., an LED device) or various sensor modules.

According to various embodiments, the key input devices 141 may be disposed on the outer surface of the second housing 120. For example, the key input device 141 may be disposed on the first side surface member 126a or the second cover member 126b. The electronic device 100 may be designed such that, according to the exterior and use state, the illustrated key input device 141 is omitted or an additional key input device(s) is(are) included. According to an embodiment, the electronic device 100 may include key input devices (not illustrated), such as a home key button or touch pads disposed around the home key button. According to another embodiment, at least a portion of the key input device 141 may be located in an area of the first housing 110.

According to various embodiments, the connector hole 143 may be omitted in some embodiments and may accommodate a connector (e.g., a USB connector) for transmitting/receiving power and/or data to/from an external electronic device. Although not illustrated, the electronic device 100 may include a plurality of connector holes 143, and some of the connector holes 143 may function as connector holes for transmitting/receiving audio signals to/from an external electronic device. In the illustrated embodiment, the connector hole 143 is disposed in the second side wall 126b, but the disclosure is not limited thereto. The connector hole 143 or a connector hole (not illustrated) may be disposed in the first side wall 126a.

According to various embodiments, the audio modules 145a, 145b, 147a, and 147b may include speaker holes 145a and 145b or microphone holes 147a and 147b. One of the speaker holes 145a and 145b may be provided as a receiver hole for a voice call, and another one may be provided as an external speaker hole. The electronic device 100 may include a microphone configured to acquire sound, and the microphone may acquire sound outside the electronic device 100 through the microphone holes 147a and 147b. According to an embodiment, the electronic device 100 may include a plurality of microphones in order to detect the direction of sound. According to an embodiment, the speaker holes 145a and 145b and the microphone holes 147a and 147b may be implemented as a single hole, or a speaker may be included without the speaker holes 145a and 145b (e.g., a piezo speaker). According to an embodiment, the speaker hole indicated by reference numeral "145b" may be disposed in the first housing 110 to be used as a receiver hole for voice call, and the speaker hole (e.g., an external speaker hole) indicated by reference numeral "145a" or the microphone holes 147a and 147b may be disposed on the first side surface member 126a and/or the second side surface member 126b of the second housing 120.

According to various embodiments, the camera module 149 may be located in the second housing 120 and may photograph a subject in a direction opposite to the first display area A1 of the display 130. The electronic device 100 may include a plurality of camera modules 149. For example, the electronic device 100 may include at least one of a wide-angle camera, a telephoto camera, and a close-up camera. In some embodiments, the electronic device 101 may include an infrared projector and/or an infrared receiver to measure the distance to a subject. The camera module 149 may include one or more lenses, an image sensor, and/or an image signal processor. Although not illustrated, the electronic device 100 may further include another camera module (e.g., a front camera) configured to photograph a subject from a direction opposite to the camera module 149 with respect to the display 130. For example, the front camera may be disposed in an area around the first display area A1 or an area overlapping the display 130, and when disposed in the area overlapping the display 130, the front camera may photograph a subject through the display 130.

According to various embodiments, an indicator (not illustrated) of the electronic device 100 may be disposed on the first housing 110 or the second housing 120 and may include a light-emitting diode to provide state information of the electronic device 100 as a visual signal. A sensor module (not illustrated) of the electronic device 100 may generate an electrical signal or a data value corresponding to an internal operating state of the electronic device 100 or an external environmental state. The sensor module may include, for example, a proximity sensor, a fingerprint sensor, or a biometric sensor (e.g., an iris/face recognition sensor or an HRM sensor). In another embodiment, the sensor module may further include at least one of, for example, a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

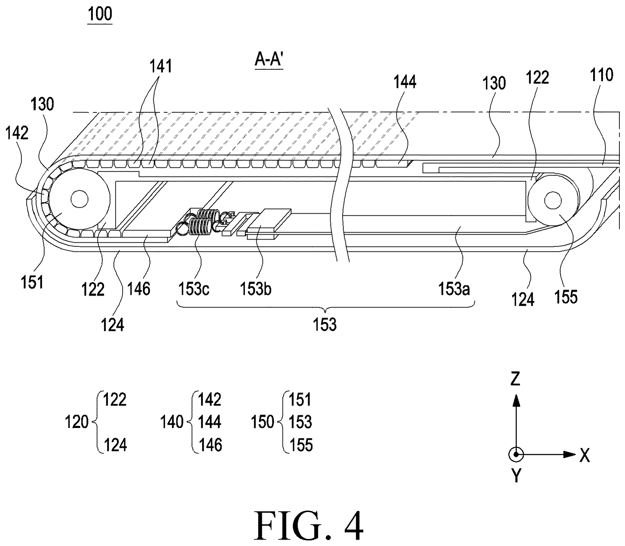

FIG. 3 is an exploded perspective view of an electronic device according to various embodiments of the disclosure. FIG. 4 is a cross-sectional view taken along line A-A' in FIG. 2.

Referring to FIGS. 3 and 4, the electronic device 100 may include a first housing 110, a second housing 120, a display 130, and a display support member 140 configured to support at least a portion of the display 130. The configurations of the first housing 110, the second housing 120, and the display 130 of FIG. 3 may be wholly or partly the same as those of the first housing 110, the second housing 120, and the display 130 of FIGS. 1 and 2.

According to various embodiments, the first housing 110 may support a portion of the display 130. For example, the first housing 110 may include a front surface F1 facing a portion of the display 130 (e.g., the first display area A1).

According to various embodiments, the second housing 120 may include a base bracket 122. According to an embodiment, the base bracket 122 may accommodate components of the electronic device 100 (e.g., the battery 102 and the printed circuit board 104).

According to various embodiments, the second housing 120 may include at least one accommodation groove 122a. According to an embodiment, the accommodation groove 122a may accommodate a portion of the display support member 140 and may guide a sliding movement of the display support member 140. According to an embodiment, the accommodation groove 122a may be provided in the base bracket 122. For example, the accommodation groove 122a may be provided in the front surface 122b and the side surface 122c of the base bracket 122.

According to various embodiments, the electronic device 100 may include guide members 128. According to an embodiment, the second housing 120 may include a first guide member 128a connected to the first side wall member 126b and a second guide member 128b connected to the second side wall member 126b. The first guide member 128a and the second guide member 128b may each include at least one groove (e.g., the groove 128a-1) configured to accommodate the display support member 140, and the display support member 140 may slide along the grooves in the first guide member 128a and the second guide member 128b. According to an embodiment, at least a portion of the guide members 128 (e.g., the first guide member 128a and the second guide member 128b) may be interpreted as a portion of the second housing 120.

According to various embodiments, the display support member 140 may support at least a portion of the display 130 (e.g., the second display area A2). For example, the display support member 140 may support the display 130 together with the first housing 110. According to an embodiment, as the first housing 110 slides, the display support member 140 is movable relative to the second housing 120. For example, the display 130 may be connected to the first housing 110 and the display support member 140. According to an embodiment, the display support member 140 may move along the first roller 151.

According to various embodiments, the display support member 140 may include multiple bars 141 or rods. The multiple bars 141 may linearly extend, may be disposed in parallel to the rotation axis (e.g., the Y-axis direction) of the first roller 151, and may be arranged substantially in parallel to each other along a direction (e.g., the direction in which the first housing 110 slides (X-axis direction)) perpendicular to the rotation axis (e.g., the Y-axis direction) of the first roller 151.

According to various embodiments, each of the bars 141 may turn around the first roller 151 while maintaining the parallel state relative to another adjacent bar 141. According to an embodiment, as the first housing 110 slides, the multiple bars 141 may be arranged to form a curved shape or may be arranged to form a flat shape. For example, as the first housing 110 slides, a portion of the display support member 140 facing the first roller 151 may form a curved surface, and another portion of the display support member 140 that does not face the first roller 151 may form a flat surface. According to an embodiment, the second display area A2 of the display 130 may be mounted or supported on the display support member 140, and in the opened state (e.g., FIG. 2), at least a portion of the second display area A2 may be visually exposed outside the second housing 120 together with the first display area A1. In the state in which the second display area A2 is exposed outside the second housing 120, the display support member 140 may support or maintain at least of the second display area A2 in the flat state by forming a substantially flat surface. According to an embodiment, the display support member 140 may be interpreted as an articulated hinge structure.

According to various embodiments, the display support member 140 may include a multi-bar assembly 142 including multiple bars 141, a first bracket 144 adjacent to one end 142a of the multi-bar assembly 142, and a second bracket 146 adjacent to the other end 142b opposite to the one end 142a. According to an embodiment, the multi-bar assembly 142 may be disposed between the first bracket 144 and the second bracket 146. According to an embodiment, the first bracket 144 may be disposed between the multi-bar assembly 142 and the first housing 110. According to another embodiment, the first bracket 144 may be interpreted as a portion of the first housing 110. According to an embodiment, when the electronic device 100 is unfolded (e.g., FIG. 2), the second bracket 146 may be disposed inside the housings 110 and 120 and may not be visually exposed. According to an embodiment, the second bracket 146 may be connected to at least one spring structure 153c. According to an embodiment, the width of the second bracket 146 may be greater than that of the bars 141. According to an embodiment, the bar 141 connected to the spring structure 153c among the multiple bars 141 may be interpreted as the second bracket 146.

According to various embodiments, the electronic device 100 may include a slide guide member 150 provided for sliding movement of the first housing 110 relative to the second housing 120. The slide guide member 150 may include a first roller 151, at least one elastic belt structure 153, and at least one second roller 155.

According to various embodiments, the first roller 151 may guide the movement of the display 140. According to an embodiment, the first roller 151 may be rotatably mounted at one edge of the base bracket 122. According to an embodiment, the first roller 151 may guide the sliding movement of the second display area A2 while rotating about the rotation axis (e.g., the Y axis).

According to various embodiments, the elastic belt structure 153 may guide the sliding movement of the display support member 140. For example, the elastic belt structure 153 may be connected to the first housing 110 and the second housing 120 and may provide an elastic force to the display support member 140. For example, the elastic belt structure 153 may include an elastic belt 153a connected to the first housing 110, an elastic belt bracket 153b connected to the elastic belt 153a and fixed to the rear surface plate 124, and a spring structure 153c connected to the elastic belt bracket 153b and the display support member 140. According to an embodiment, the elastic belt 153a and the spring structure 153c may provide elastic forces to the display support member 140 in different directions. The display support member 140 may receive elastic forces in the opposite directions by the elastic belt 153a and the spring structure 153c, and wrinkles or creases of the display 130 and/or the display support member 140 may be reduced.

According to various embodiments, the second roller 155 may guide the movement of the elastic belt 153. According to an embodiment, the second roller 155 may be rotatably mounted at the other edge of the base bracket 122. According to an embodiment, the second roller 155 may guide the sliding movement of the elastic belt 153a while rotating about the rotation axis (e.g., the Y axis).

According to various embodiments, the electronic device 100 may include a battery 102. The battery 102 is capable of supplying power to at least one component of the electronic device 100. According to an embodiment, the battery 102 may include, for example, a non-rechargeable primary cell, a rechargeable secondary cell, or a fuel cell. According to an embodiment, the battery 102 may be disposed inside the housings 110 and 120. For example, the battery 102 may be mounted on a portion of the second housing 120 (e.g., the base bracket 122).

According to various embodiments, the electronic device 100 may include a printed circuit board 104 on which a processor (not illustrated) or a memory (not illustrated) is mounted. According to an embodiment, the printed circuit board 104 may be disposed inside the housings 110 and 120. For example, the printed circuit board 120 may be disposed between the base bracket 122 and the rear surface plate 124.

The processor may control one or more other components (e.g., a hardware component or a software component) of the electronic device 100, which are connected to the processor and may perform various data processing or arithmetic operations by executing, for example, software (e.g., a program). According to an embodiment, the processor may include a main processor (e.g., a central processor or an application processor), or an auxiliary processor 1323 (e.g., a graphics processor, a neural processing unit (NPU), an image signal processor, a sensor hub processor, or a communication processor), which operates independently from or together with the main processor 1321.

The memory may store various data used by at least one component (e.g., the processor) of the electronic device 100. The memory may include volatile memory or non-volatile memory.

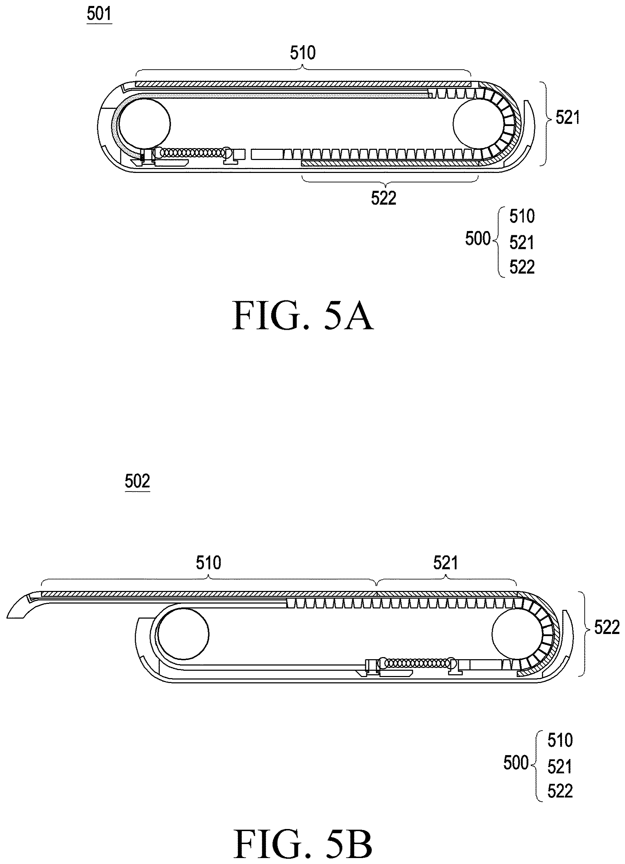

FIGS. 5A and 5B are side views illustrating a closed state and an opened state of a slidable electronic device according to various embodiments of the disclosure.

Referring to FIGS. 5A and 5B, an electronic device 100 includes a first housing 110, a second housing 120, a flexible display 500, a roller (e.g., a first roller 151 or a second roller 155), and a display support member 140 configured to support at least a portion of the flexible display 500. The configurations of the first housing 110, the second housing 120, and the display support member 140 may be wholly or partly the same as the configurations of those of FIGS. 1 and 2.

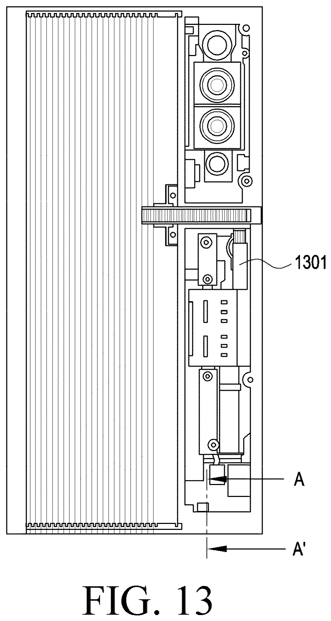

According to various embodiments, a motor (e.g., the motor 1301 of FIG. 13) rotates the roller (e.g., the first roller 151 or the second roller 155) to move the flexible display 500.

According to various embodiments, in the flexible display 500, a glass substrate or a high-hardness substrate may be replaced with a flexible film that is foldable/unfoldable. By using the film as the substrate, the flexible display is advantageous in that it is thin, light, strong against impact, and foldable/unfoldable. The flexible display may have a structure in which a film is stacked on a display. The film may have physical properties that maintain a viscoelastic characteristic and has a recovery characteristic in a wide temperature range.

According to various embodiments, the flexible display 500 includes a first display area 510 and a second display area 520. For the first display area 510 and the second display area 520, reference may be made to the descriptions made with reference to FIGS. 1 to 4.

According to various embodiments, the second display area A2 may include a (2-1)^{th} area 521 and a (2-2)^{th} area 522.

According to various embodiments, the (2-1)^{th} area 521 is an area of the flexible display 500 that forms a curved surface by a roller (e.g., the first roller 151 or the second roller 155), and when the flexible display 500 is moved from the closed state 501 to the opened state 502 by a motor (e.g., the motor 1301 of FIG. 13), the (2-1)^{th} area 521 may be located in the place where the first display area 510 has been located. For the closed state (e.g., FIG. 5A) and the opened state (e.g., FIG. 5B), reference may be made to descriptions made with reference to FIGS. 1 to 4.

According to various embodiments, in the closed state of the first housing 110 relative to the second housing 120 (e.g., FIG. 5A), the (2-1)^{th} area 521 may form a curved surface and the (2-2)^{th} area 522 may form a flat surface, and in the opened state (e.g., FIG. 5B) of the first housing 110 relative to the second housing 120 (e.g., FIG. 5B), the (2-1)^{th} area 521 may form a flat surface and the (2-2)^{th} area 522 may form a curved surface.

According to various embodiments, the (2-1)^{th} area 521 will form a curved surface in the closed state (e.g., FIG. 5A) and will form a flat surface while moving to the opened state (e.g., FIG. 5B). The (2-2)^{th} area 522 will form a flat surface in the closed state (e.g., FIG. 5A) and will form a curved surface while moving to the opened state (e.g., FIG. 5B).

According to various embodiments, the 2-1 area 521 may change in shape from a flat surface to a curved surface or *vice versa* while moving to the closed state (e.g., FIG. 5A) and the opened state (e.g., FIG. 5B). For example, a repulsive force 601 may act on the (2-1)^{th} area 521 due to the shape change of the (2-1)^{th} area 521. For example, when the (2-1)^{th} area 521 changes in shape from a flat surface to a curved surface, a greater repulsive force may act on the (2-1)^{th} area 521 than that in a case where the (2-1)^{th} area 521 changes in shape from a curved surface to a flat surface.

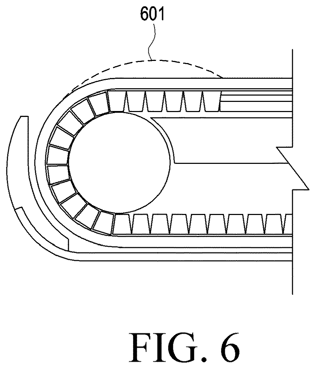

FIG. 6 is a side view illustrating lifting of a flexible display of a slidable electronic device according to various embodiments of the disclosure.

According to various embodiments, an electronic device 100 includes a first housing 110, a second housing 120, a display 130, a display support member 140 configured to support at least a portion of the display 130, a roller (e.g., the first roller 151 or the second roller 155), and a flexible display 500. For the above-mentioned components, the descriptions made with reference to FIGS. 1 to 5 may be referred to.

According to various embodiments, the flexible display 500 includes a first display area 510 and a second display area 520, and the second display area 520 includes a (2-1)^{th} area 521 and a (2-2)^{th} area 522. For the above-mentioned components, reference may be made to the description made with reference to FIG. 5.

According to various embodiments, the display support member 140 may include multiple bars 141 or rods. For example, as the first housing 110 slides, a portion of the display support member 140 facing the first roller 151 may form a curved surface. For example, the (2-1)^{th} area 521 of the flexible display 500 is mounted or supported on the display support member 140, and in order to enter the closed state (e.g., FIG. 5), a portion of the (2-1)^{th} area 521 may be introduced into the second housing 120. After forming a substantially flat shape, the portion of the (2-1)^{th} area 521 may form a curved surface while entering the closed state (e.g., FIG. 5A).

According to various embodiment, when the flexible display 500 forms a curved surface after forming a flat surface, a repulsive force may act to flatten lifting 601 of the flexible display 500 to the original state. According to another embodiment, when the flexible display 500 forms a curved surface after forming a flat surface, a restoring force (not illustrated) may act to restore the original shape. For example, as the display support member 140 moves to position the (2-1)^{th} area 521 inside, a gap may be formed relative to the display support member 140 by a repulsive force. For example, in a vicinity where a portion of the display support member 140 forms a curved surface, the (2-1)^{th} area 521 will be less bent than the curved surface of the first roller 151 due to a repulsive force which maintains the flat surface. According to the physical properties of the flexible display 500, the repulsive force may increase or decrease in accordance with condition.

Since the lifting 601 caused by the repulsive force deforms the flexible display 500, the sliding movement of the flexible display 500 may not be smooth, and when the touch panel or the like comes into contact with a user, problems in terms of the quality and stability of the display may occur. Therefore, it is necessary to minimize the degree of deformation of the flexible display 500 by the repulsive force.

According to various embodiments, a motor (e.g., the motor 1301 of FIG. 13) may control an output in order to prevent smooth movement from being inhibited by the repulsive force of the flexible display 500. According to another embodiment, when the motor is strongly controlled in a state in which the repulsive force of the flexible display 500 is generated, the stress of the flexible display 500 may be increased, so the motor output may be controlled for stability.

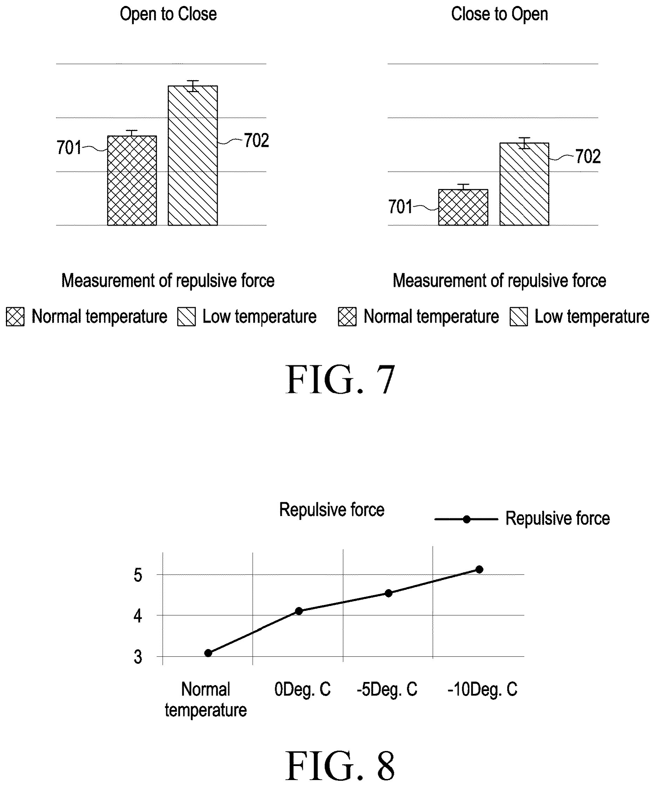

FIG. 7 is a view for describing a difference in repulsive force according to the operation of a slidable electronic device according to various embodiments of the disclosure.

Referring to Figure 7, 701 indicates a graph representing a repulsive force measured when moving from an opened state (e.g., FIG. 5B) to a closed state (e.g., FIG. 5A), and 702 indicates a graph representing a repulsive force measured when moving from a closed state (e.g., FIG. 5A) to an opened state (e.g., FIG. 5B).

According to various embodiments, comparing the repulsive forces measured in a constant temperature environment for the (2-1)^{th} area 521, the repulsive force when moving from the opened state (e.g., FIG. 5B) to the closed state (e.g., FIG. 5A) (e.g., "Open to Close (701)" in FIG. 7) may be greater than the repulsive force when moving in the opposite direction (e.g., "Close to Open (702)" in FIG. 7). In other words, it can be seen that the repulsive force when the shape of the (2-1)^{th} area 521 changes from a flat surface to a curved surface (e.g., "Open to Close" (701) in FIG. 7) is greater than the repulsive force when the shape of the (2-1)^{th} area 521 changes from a curved surface to a flat surface (e.g., "Close to Open (702)" in FIG. 7).

According to various embodiments, when measuring the repulsive force of the (2-2)^{th} area 522 in a constant temperature environment, the repulsive force when moving from the opened state (e.g., FIG. 5B) to the closed state (e.g., FIG. 5A) may be smaller than the repulsive force when moving in the opposite direction. In other words, the repulsive force when the (2-2)^{th} area 522 changes in shape from a curved surface to a flat surface may be smaller than the repulsive force when the (2-2)^{th} area 522 changes in shape from the flat surface to the curved surface.

According to various embodiments, by measuring the ambient temperature of the (2-1)^{th} area 521 or the (2-2)^{th} area 522 with reference to FIG. 7, the repulsive force at a normal temperature and the repulsive force at a low temperature may be compared. Referring to the graphs 701 and 702 of FIG. 7, in common, the repulsive force at the normal temperature may be smaller than the repulsive force at the low temperature.

For example, when moving from the opened state (e.g., FIG. 5B) to the closed state (e.g., FIG. 5A) as illustrated in (701) of FIG. 7 (e.g., "Open to Close (701)" in FIG. 7), when the ambient temperature of the (2-1)^{th} area 521 is the normal temperature, a lower repulsive force may act compared to the repulsive force when the ambient temperature is the low temperature. Similarly, when moving from the opened state (e.g., FIG. 5B) to the closed state (e.g., FIG. 5A) (e.g., "Open to Close (701)" in FIG. 7), when the ambient temperature of the (2-2)^{th} area 522 is the normal temperature, a lower repulsive force may act compared to the repulsive force when the ambient temperature is the low temperature.

For example, when moving from the closed state (e.g., FIG. 5A) to the opened state (e.g., FIG. 5B) as illustrated in (702) of FIG. 7 (e.g., "Close to Open (702)" in FIG. 7), when the ambient temperature of the (2-1)^{th} area 521 is the normal temperature, a lower repulsive force may act compared to the repulsive force when the ambient temperature is the low temperature. Similarly, comparing the repulsive forces acting on the (2-2)^{th} area and measured at the normal temperature and at the low temperature when moving from the closed state (e.g., FIG. 5A) to the open state (e.g., FIG. 5B) (e.g., "Close to Open (702)" in FIG. 7), the repulsive force at the low temperature may have a greater action/be greater than the action of the repulsive force at the low temperature. FIG. 8 is a view for describing a difference in repulsive force according to the operation of a slidable electronic device according to various embodiments of the disclosure.

The x-axis may represent the temperature, and the y-axis may represent the repulsive force. According to various embodiments, it can be seen that as the temperature decreases from a normal temperature for each range, the repulsive force increases. The unit of the repulsive force is not particularly defined and may be expressed as relative values between 3 and 5. Referring to FIG. 8, it can be seen that a greater repulsive force can be obtained in a low temperature range. In this regard, referring to Table 1 below, since the degree of increase in repulsive force for each temperature needs to be identified and the motor needs to be adjusted accordingly, the levels of repulsive forces may be identified in advance and quantified.

For example, as in Table 1, temperature ranges divided at about 5-degrees C intervals may be obtained by indicating a normal temperature, 0 degrees C, -5 degrees C, and -10 degrees C. Assuming that the normal temperature is equal to or higher than 0 degrees C, the magnitudes of the repulsive forces (the unit of which is omitted) of respective temperature ranges in one area of the flexible display 500 of the electronic device 100 may be compared. In order to compare the magnitudes of the repulsive forces in Table 1, only the temperature condition may be varied, and the one area, the shape change, and the one-state holding time of the flexible display 500 may be set to be constant. As a result, it can be seen that the difference in repulsive force is approximately 3.11 at the normal temperature and, as the temperature decreases at approximately -5 degree C intervals, the repulsive force increases to approximately 4.08, 4.52, and 5.07. In Table 1, the repulsive force increases gradually for each divided range, but the repulsive force may also increase continuously when the temperature decreases continuously.

**[Table 1]**

| Smartphone temperature | Repulsive force |
|---|---|
| Normal temperature | 3.11 |
| 0 degrees C | 4.08 |
| -5 degrees C | 4.52 |
| -10 degrees C | 5.07 |

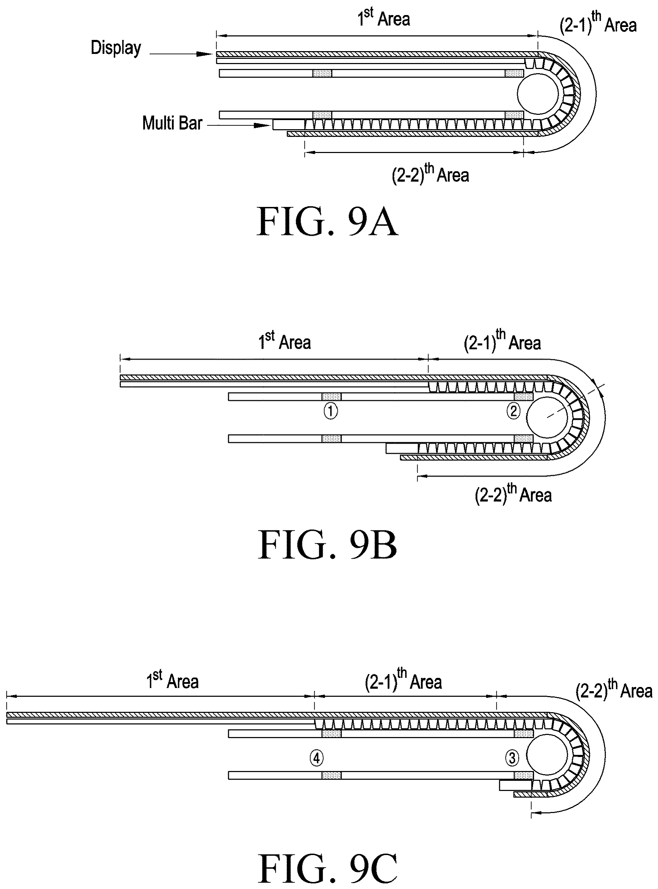

FIGS. 9A, 9B, and 9C are views illustrating the sliding movement of each area of a flexible display in a slidable electronic device according to various embodiments of the disclosure. According to various embodiments, a flexible display 500 includes a first display area 510 and a second display area 520, and the second display area may include a (2-1)^{th} area 521 and a (2-2)^{th} area 522. For the flexible display 500, the description of FIG. 5 may be referred to.

According to various embodiments, for the description of controlling the motor output when the flexible display 500 enters a curved section according to the closed state (e.g., FIG. 5A) and the open state (e.g., FIG. 5B), the description of FIGS. 5A and 5B may be referred to. For the magnitude of the repulsive force 600 according to each temperature range of the flexible display 500, the description of FIGS. 7 to 8 may be referred to. For the description of the repulsive force 601 of the flexible display 500, FIG. 6 may be referred to.

According to various embodiments, the temperature of each area of the flexible display 500 may be detected, and the motor output may be controlled according to the temperature when the corresponding area enters the curved section.

According to various embodiments, when it is intended to control the motor output according to the temperature when the flexible display 500 moves to the opened state (e.g., FIG. 9C) and the closed state (e.g., FIG. 9A), the point at which the reference temperature is to be measured may be a point in an area of the flexible display 500 entering a curved section.

According to various embodiments, when the flexible display 500 moves from the closed state (e.g., FIG. 5A) to the opened state (e.g., FIG. 5B) and the (2-1)^{th} area, which has formed a curved surface, forms a flat surface, temperatures may be measured at point ② in FIG. 9B and point ③ in FIG. 9C, and the motor may be driven with reference to the measured temperatures. When the flexible display 500 moves from the opened state (e.g., FIG. 5B) to the closed state (e.g., FIG. 5A) and the (2-1)^{th} area, which has formed a flat surface, forms a curved surface, temperatures may be measured at point ① and point ② in FIG. 9B, and the motor may be driven with reference to the measured temperatures.

According to various embodiments, when the flexible display 500 moves from the closed state (e.g., FIG. 5A) to the opened state (e.g., FIG. 5B) and the (2-2)^{th} area, which has formed a flat surface, forms a curved surface, temperatures may be measured at point ③ and point ④ in FIG. 9C, and the motor may be driven with reference to the measured temperatures. According to various embodiments, when the flexible display 500 moves from the opened state (e.g., FIG. 5B) to the closed state (e.g., FIG. 5A) and the (2-2)^{th} area, which has formed a curved surface, forms a flat surface, temperatures may be measured at point ② in FIG. 9B and point ③ in FIG. 9C, and the motor may be driven with reference to the measured temperatures. In other words, when each area enters a curved section, the motor output may be adjusted by using a thermistor adjacent to the corresponding area.

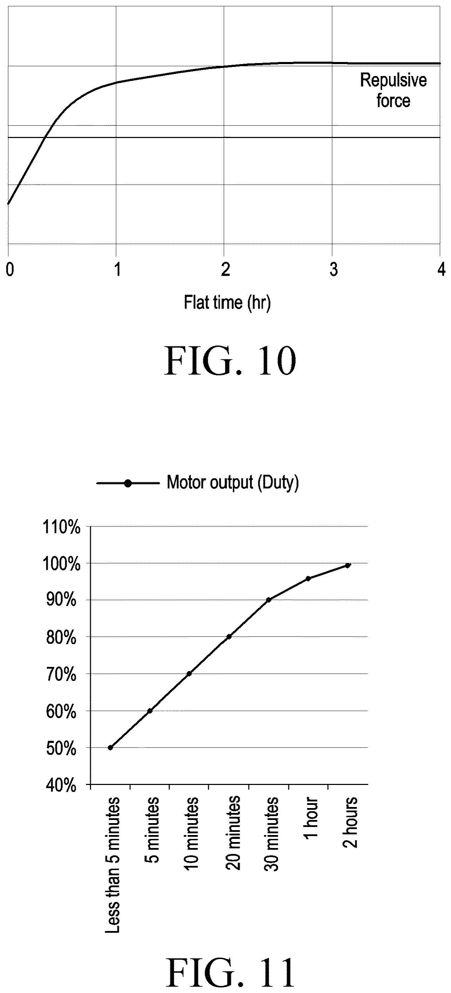

FIG. 10 is a diagram illustrating a difference in repulsive force according to a one-state holding time according to embodiments of the disclosure.

FIG. 11 is a diagram illustrating a motor output according to a one-state holding time according to an embodiment of the disclosure.

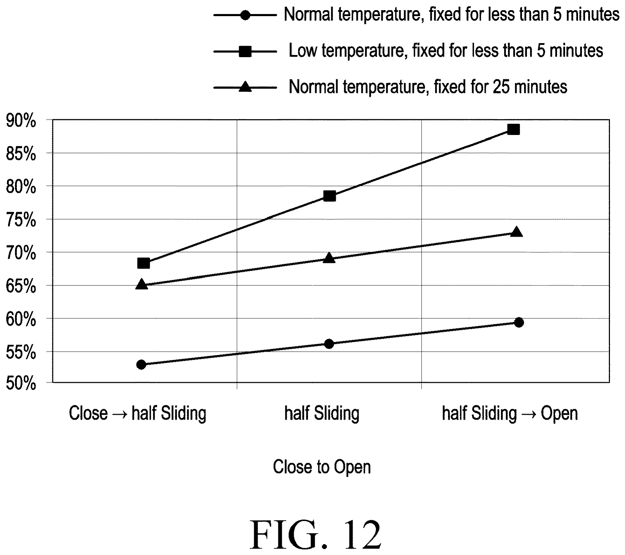

FIG. 12 is a diagram comparing the outputs of motors according to various embodiments of the disclosure.

According to various embodiments, a flexible display 500 includes a first display area 510 and a second display area 520, and the second display area may include a (2-1)^{th} area 521 and a (2-2)^{th} area 522. For the flexible display 500, reference may be made to the description made with reference to FIG. 5.

According to various embodiments, for the description of controlling the motor output when the flexible display 500 enters a curved section according to the closed state (e.g., FIG. 5A) and the opened state (e.g., FIG. 5B), the description of FIGS. 5A and 5A may be referred to. For the magnitude of the repulsive force according to each temperature range of the flexible display 500, the description of FIGS. 7 to 8 may be referred to. For the description of the repulsive force of the flexible display 500, FIG. 6 may be referred to.

According to various embodiments, the flexible display 500 may stop at one point while moving between the closed state (e.g., FIG. 5A) and the opened state (e.g., FIG. 5B). When a one-state holding time is represent on the x-axis and a repulsive force is represented on the y-axis, it can be seen that as the one-state holding time increases, the repulsive force increases and converges to a certain value. On the contrary to repulsive force, as the one-state holding time increases, it becomes difficult to restore, and thus a restoring force may gradually decrease. Referring to FIG. 10, as the state in which the flexible display 500 is stopped is prolonged, the repulsive force 601 may gradually increase and then converge at a certain level. For example, as the time for which at least one surface of the flexible display 500 is held in a flat or curved state increases, the repulsive force may gradually increase.

For example, the magnitude of the repulsive force when the (2-1)^{th} area 521 forms a flat surface in the opened state (e.g., FIG. 5B) and the flat surface is held for about 30 minutes and the magnitude of the repulsive force in a case when the (2-1)^{th} area 521 forms a flat surface in the opened state (e.g., FIG. 5B) and the flat surface is held for about 2 hours may be compared. In the case where the flexible display 500 moves to the closed state (e.g., FIG. 5A), the repulsive force applied to the (2-1)^{th} area 521 when the flexible display 500 is left for about 30 minutes may be smaller than the repulsive force acting on the (2-1)^{th} area 521 when the flexible display 500 is left for about 2 hours.

For example, the magnitude of the repulsive force when the (2-2)^{th} area 522 forms a flat surface in the opened state (e.g., FIG. 5B) and the flat surface is held for about 30 minutes and the magnitude of the repulsive force in a case when the (2-2)^{th} area 522 forms a flat surface in the opened state (e.g., FIG. 5B) and the flat surface is held for about 2 hours may be compared. In the case where the flexible display 500 moves to the closed state (e.g., FIG. 5A), the repulsive force applied to the (2-2)^{th} area 522 when the flexible display 500 is left for about 30 minutes may be smaller than the repulsive force acting on the (2-2)^{th} area 522 when the flexible display 500 is left for about 2 hours.

Referring to FIG. 10, the repulsive force 601 and the restoring force may be expressed as relative values without defining a specific unit.

Referring to Table 2 below, in the closed state (e.g., FIG. 5A), the (2-2)^{th} area 522 may form a flat surface, and may hold the flat surface for about 10 minutes, 30 minutes, 1 hour, or 2 hours. For example, when the (2-2)^{th} area 522 moves to the opened state (e.g., FIG. 5B) to form a curved surface while forming a flat surface for about 10 minutes, the restoring force (not illustrated) acting on the (2-2)^{th} area 522 may be about 25%. The unit of restoring force (not illustrated) may be omitted and may be understood as a relative value. When the (2-2)^{th} area 522 moves to the opened state (e.g., FIG. 5B) to form a curved surface while forming a curved surface for about 2 hours, the restoring force (not illustrated) acting on the (2-2)^{th} area 522 may be about 100%. For example, if the (2-2)^{th} area 522, which is to form a curved surface, has been held in a flat state for about 2 hours, the (2-2)^{th} area 522 may be difficult to form the curved surface and a great restoring force (not illustrated) to form the flat surface may act on the (2-2)^{th} area. For example, with respect to one area forming a flat surface while the flexible display 500 moves between the closed state (e.g., FIG. 5A) and the open state (e.g., FIG. 5B), until the one-state holding time is less than 1 hour, the restoring force may increase significantly whenever the one-state holding time increases. It can be seen that the range of increase in restoring force is reduced when the one-state holding time is about 1 hour or more.

**[Table 2]**

| Time in flat state (elapsed time left in closed state) | Restoring force |
|---|---|
| 10 minutes | 25% |
| 30 minutes | 70% |
| 1 hour | 90% |
| 2 hours | 100% |

According to various embodiments, the one-state holding time (leaving time) of the flexible display 500 in the closed state (e.g., FIG. 5A) and the opened state (e.g., FIG. 5B) may be counted, and the motor output is controlled according to the one-state holding time. Since the repulsive force 601 increases as the one-state holding time increases, the output may be increased to maintain the sliding speed of the flexible display 500 constant. Referring to FIG. 11, it can be seen that the increase rate of the output in the section where the one-state holding time on the x-axis is less than about 1 hour is greater than the increase rate of the output when the one-state holding time is equal to or greater than 1 hour. For example, it can be seen that the repulsive force 601 and the restoring force converge to certain values when the one-state holding time is about 2 hours or more.

Referring to Table 3, it is possible to identify the level of an output according to each one-state holding time. For example, when a motor output was measured while gradually increasing the leaving time (the one-state holding time) at intervals of about 5 minutes,

Referring to Table 2, it can be seen that in the section where the leaving time (the one-state holding time) is about 10 minutes, the restoring force is about 25% and when the leaving time (the one-state holding time) is about 1 hour, the restoring force is about 90%.

According to various embodiments, since the force to return the flexible display 500 to its original shape increases as the restoring force increases, the motor output may be increased such that the flexible display 500 naturally slides by the roller while forming a curved surface. Therefore, it can be understood that as the restoring force increases, the motor output may also increase.

For example, in Table 3, it can be seen that as the leaving time increases at intervals of about 5 minutes, the motor output gradually increases by about 10% to about 5%. The increase rate of the motor output may be controlled in consideration of the increase rate of the restoring force according to the increase of the leaving time. For example, in Table 3, assuming that the motor output is controlled to about 99% in the case where the leaving time is about 2 hours or more, the motor output may be controlled to be lowered to 50% in the case where the leaving time is less than about 5 minutes.

**[Table 3]**

| Leaving time | Motor output (duty) |
|---|---|
| Less than 5 minutes | 50% |
| 5 minutes | 60% |
| 10 minutes | 70% |
| 20 minutes | 80% |
| 30 minutes | 90% |
| 1 hour | 95% |
| 2 hours | 99% |

According to various embodiments, the motor output may be controlled in complex consideration of various environments in which the flexible display 500 is placed. For the description of the repulsive force according to the shape change of the flexible display 500, FIGS. 5 to 7 may be referred to. For the description of the repulsive force according to the temperature of the flexible display 500, FIGS. 7 to 9 may be referred to. For the description of the repulsive force according to the one-state holding time of the flexible display 500, FIGS. 10 to 12 may be referred to.

According to various embodiments, the repulsive force of the flexible display 500 may be determined in complex consideration of various environments in which the flexible display 500 is placed. It can be seen that the repulsive force 601 of the flexible display 500 may be determined according to at least one of the shape change, the temperature, and the one-state holding time of the flexible display 500.

Referring to Table 4, the time for measuring the time to maintain one of the open state (e.g., FIG. 5B) or the closed state (e.g., FIG. 5A) (leaving time) may be divided into 5-minute increments. A motor (e.g., the motor 1301 of FIG. 13) may rotate the roller to move the flexible display 500, and the flexible display 500 may be divided into first to fourth sections with reference to the rotation angle. For example, with reference to one area of the flexible display 500, according to the rotation angle of the roller, it may be assumed that the state immediately before entering the roller is a first section, and the section forming a curved surface by the rotation of the roller may be divided into second to fourth sections. It can be identified that in each of the first to fourth sections, the motor output (motor duty) gradually increases as the one-state holding time increases. In addition, it can be seen that the repulsive force gradually increases when moving from the first section to the fourth section when the one-state holding time is maintained constant.

For example, when the (2-1)^{th} area 521 of the flexible display 500 moves from the opened state (e.g., FIG. 5B) to the closed state (e.g., FIG. 5A), the time for which the flat surface is formed may be counted in the opened state (e.g., FIG. 5B). When the holding time for which the flat surface is formed is between about 5 and 10 minutes, the (2-1)^{th} area 521 may enter a section in which the (2-1)^{th} area is curved by the roller so that the closed state (e.g., FIG. 5A) is made by the operation of the motor. The roller may move the (2-1)^{th} area 521 while rotating from the opened state (e.g., FIG. 5B) to the closed state (e.g., FIG. 5A). The first section in which the (2-1)^{th} area 521 forms a curved surface may refer to a rotation angle range (about 45 degrees or more) of the roller in which the (2-1)^{th} area 521 moves while forming a flat surface and then enters the section curved by the roller. The second section refers to a section between about 15 degrees and 45 degrees in which the (2-1)^{th} area 521 further forms a curved shape while the roller further rotates from the first section, and the third section and the fourth section refer to a section from about 0 degrees to 15 degrees and a section of less than 0 degrees, respectively, in each of which the corresponding portion of the (2-1)^{th} area 521 forms a curved surface. It can be seen that as the (2-1)^{th} area 521 formed a curved surface according to the rotation of the roller from the first section to the fourth section, the motor output also increased from about 53% to about 78%.

**[Table 4]**

| Drive table (motor duty) | Leaving time (opened/closed state holding time) | | | |
|---|---|---|---|---|
| | Up to 5 minutes | 5 to 10 minutes | 10 to 20 minutes | 20 to 30 minutes |
| 1^{st} section (45 | 50% | 53% | 56% | 59% |
| degrees or more) | | | | |
| 2^{nd} section (15 to 45 degrees) | 53% | 57% | 61% | 65% |
| 3^{rd} section (0 to 15 degrees) | 58% | 64% | 70% | 76% |
| 4^{th} section (less than 0 degrees) | 68% | 78% | 88% | 98% |

According to various embodiments, the output may be continuously increased in at least one of a case where at a portion of the second display area changes from the flat surface to the curved surface, a case where the temperature of the flexible display is equal to or lower than a specific temperature, and a case where the one-state holding time of the flexible display is greater than or equal to a predetermined period of time. Referring to FIG. 12, by representing on the X axis the case where at least a portion of the second display area changes in shape from a flat surface to a curved surface while the roller rotates from the closed state (e.g., FIG. 5A) to the opened state (e.g., FIG. 5B) is the x-axis, the magnitudes of repulsive forces 601 may be compared according to a temperature. At this time, when the one-state holding times are equally set to less than 5 minutes and the repulsive force is shown for each temperature, it can be seen that the repulsive forces show values between 50% and 60% at a normal temperature, while the repulsive forces have values between 65% and 90% at a low temperature. When the temperature is maintained at the normal temperature and the repulsive force is shown for each one-state holding time, it can be seen that the repulsive force when the one-state holding time is 25 minutes is about 25% higher than the repulsive force when the one-state holding time is 5 minutes.

FIG. 13 is a view illustrating a motor and a driving rail in an electronic device of the disclosure.

According to various embodiments, an electronic device 100 includes a first housing 110, a second housing 120, a display 130, and a display support member 140 configured to support at least a portion of the display 130. The configurations of the first housing 110, the second housing 120, the display 130, and the display support member 140 may be wholly or partly the same as those of the first housing 110, the second housing 120, and the display 130 of FIGS. 1 and 2. For the first housing 110, the second housing 120, the flexible display 500, the roller (e.g., the first roller 151 or the second roller 155) and the support member 140, the disclosures of FIGS. 1 to 5 may be referred to.

According to various embodiments, a motor (e.g., the motor 1301 of FIG. 13) rotates the roller (e.g., the first roller 151 or the second roller 155) to move the flexible display 500.

For example, referring to FIG. 13, by adjusting a reference voltage duty (Vref duty) of each phase A/B in a motor (e.g., the motor 1301 of FIG. 13) of a step motor driver integrated circuit (IC), it is possible to control the output by the rotation of a rotor. The output of the motor (e.g., the motor 1301 of FIG. 13) may be adjusted such that when the duty of the reference voltage (Vref) increases, an average current (Iavg) increases and the magnetic field of a stator phase increases to increase the rotation speed (output) of the rotor. Therefore, regarding the duty of the motor (e.g., the motor 1301 of FIG. 13), a period in which the reference voltage (Vref) is applied may be referred to as a duty-on section and a period in which the reference voltage (Vref) is 0 may be referred to as a duty-off section.

According to various embodiments, when the flexible display 500 slides and enters a curved section, a repulsive force 601 may act on the flexible display 500. For the description of the repulsive force 601, FIG. 6 may be referred to. In order to prevent the sliding movement due to the repulsive force of the flexible display 500 from deteriorating, it is possible to maintain the moving speed constant by increasing the output of the motor (e.g., the motor 1301 of FIG. 13). Alternatively, by appropriately adjusting the output of the motor (e.g., the motor 1301 of FIG. 13), it is possible to prevent excessive stress from being applied to the flexible display 500.

According to the disclosure, the electronic device 100 may be advantageous in that the motor output can be adjusted to provide the flexible display 500 configured to slide at a constant speed to a user and the stability of the flexible display 500 can be improved.

## Claims

1. An electronic device comprising:
a first housing (110);
a second housing (120) configured to accommodate at least a portion of the first housing (110) and to guide a sliding movement of the first housing (110);
a flexible display (130) including a first display area (510) connected to the first housing (110) and a second display area (520) extending from the first display area (510) and at least partially accommodated inside or visually exposed outside the second housing (120) according to the sliding movement of the first housing (110);
a roller (155) disposed inside the second housing (120) and configured to move the flexible display (130), bringing the electronic device in an open or a closed state, and to guide the second display area (520) when the flexible display (130) is moved;
a motor (1301) configured to rotate the roller (155); and
a support member (140) configured to support at least a portion of the flexible display (130) in the second display area (520),
**characterised in that**:
the motor (1301) is configured such that an output of the motor (1301) is determined according to a one-state holding time of the flexible display (130), the one-state holding time being the amount of time that the electronic device was left in the open state, the closed state or the state whereby the flexible display was stopped at one point while moving between the closed state and the open state.

2. The electronic device of claim 1, wherein the second display area (520) comprises a (2-1)^{th} area and a (2-2)^{th} area which is connected to the (2-1)^{th} area,
in the opened state, the area (2-1)^{th} forms a flat surface and the (2-2)^{th} area forms a curved surface, and
in the closed state, the area (2-1)^{th} forms a curved surface and the (2-2)^{th} area forms a flat surface.

3. The electronic device of claim 2, wherein the output continuously increases as the one-state holding time increases.

4. The electronic device of claim 2, wherein, in case that the one-state holding time of the second display area (520) exceeds a predetermined period of time, the output is increased to maintain the moving speed of the flexible display (130) constant or the output is decreased to reduce the stress applied to the second display area (520).

5. The electronic device of claim 1, wherein the output of the motor (1301) is determined based on an additional consideration about at least one of a temperature and a shape change of the flexible display (130).

6. The electronic device of claim 5, wherein the output is continuously increased while the shape of the (2-2)^{th} area changes from the flat surface to the curved surface by moving to the opened state.

7. The electronic device of claim 5, wherein, in case that the shape of the (2-2)^{th} area changes to the curved surface by moving to the opened state, the output is increased compared to the case that the shape of the (2-2)^{th} area changes from the curved surface to the flat surface by moving to the closed state.

8. The electronic device of claim 5, wherein the output is controlled according to the temperature of the (2-2)^{th} area in case of moving to the opened state, and
the output is controlled according to the temperature of the (2-1)^{th} area in case of moving to the closed state.

9. The electronic device of claim 5, wherein, in case that the temperature of the second display area is equal to or less than a specific temperature, the output is increased in order to make a moving speed of the flexible display (130) constant in case of moving to the opened state and the closed state, or the output is decreased in order to reduce the stress applied to the second display area (520).

10. The electronic device of claim 5, wherein the output is gradually increased in at least one of a case where a portion of the second display area (520) changes from the flat surface to the curved surface, a case where the temperature of the flexible display (130) is equal to or less than a specific temperature, and a case where the one-state holding time of the flexible display (130) is greater than or equal to a predetermined period of time.

11. The electronic device of claim 1, wherein the support member (140) is formed as a segmented structure and is configured to support the flexible display (130) to be movable following rotation of the roller (155).

12. The electronic device of claim 11, wherein the support member (140) forms a predetermined gap with the flexible display (130) and forms a predetermined gap with a multi-bar assembly (142) configured to move the support member (140) so that the support member (140) is flexibly movable between the flexible display (130) and the multi-bar assembly (142).

## Patentansprüche

1. Elektronische Vorrichtung, umfassend:
ein erstes Gehäuse (110);
ein zweites Gehäuse (120), das dazu konfiguriert ist, mindestens einen Abschnitt des ersten Gehäuses (110) aufzunehmen und eine Gleitbewegung des ersten Gehäuses (110) zu führen;
eine flexible Anzeige (130), die eine erste Anzeigefläche (510), die mit dem ersten Gehäuse (110) verbunden ist, und eine zweite Anzeigefläche (520) enthält, die sich von der ersten Anzeigefläche (510) erstreckt und gemäß der Gleitbewegung des ersten Gehäuses (110) mindestens teilweise innerhalb des zweiten Gehäuses (120) aufgenommen ist oder außerhalb davon sichtbar freiliegt;
eine Rolle (155), die innerhalb des zweiten Gehäuses (120) angeordnet und dazu konfiguriert ist, die flexible Anzeige (130) zu bewegen, wodurch die elektronische Vorrichtung in einen offenen oder geschlossenen Zustand gebracht wird, und die zweite Anzeigefläche (520) zu führen, wenn die flexible Anzeige (130) bewegt wird;
einen Motor (1301), der dazu konfiguriert ist, die Rolle (155) zu drehen; und
ein Stützelement (140), das dazu konfiguriert ist, mindestens einen Abschnitt der flexiblen Anzeige (130) in der zweiten Anzeigefläche (520) zu stützen,
**dadurch gekennzeichnet, dass**:
der Motor (1301) derart konfiguriert ist, dass eine Ausgangsleistung des Motors (1301) gemäß einer Eins-Zustand-Haltezeit der flexiblen Anzeige (130) bestimmt wird, wobei die Eins-Zustand-Haltezeit die Zeitdauer ist, die die elektronische Vorrichtung in dem offenen Zustand, dem geschlossenen Zustand oder dem Zustand, in dem die flexible Anzeige an einem Punkt gestoppt wurde, während sie sich zwischen dem geschlossenen Zustand und dem offenen Zustand bewegte, gelassen wurde.

2. Elektronische Vorrichtung nach Anspruch 1, wobei die zweite Anzeigefläche (520) eine (2-1)-te Fläche und eine (2-2)-te Fläche umfasst, die mit der (2-1)-ten Fläche verbunden ist,
im geöffneten Zustand die (2-1)-te Fläche eine flache Oberfläche ausbildet und die (2-2)-te Fläche eine gekrümmte Oberfläche ausbildet und
im geschlossenen Zustand die (2-1)-te Fläche eine gekrümmte Oberfläche ausbildet und die (2-2)-te Fläche eine flache Oberfläche ausbildet.

3. Elektronische Vorrichtung nach Anspruch 2, wobei die Ausgangsleistung kontinuierlich zunimmt, wenn die Eins-Zustand-Haltezeit zunimmt.

4. Elektronische Vorrichtung nach Anspruch 2, wobei in dem Fall, dass die Eins-Zustand-Haltezeit der zweiten Anzeigefläche (520) eine vorbestimmte Zeitdauer überschreitet, die Ausgangsleistung erhöht wird, um die Bewegungsgeschwindigkeit der flexiblen Anzeige (130) konstant zu halten, oder die Ausgangsleistung verringert wird, um die auf die zweite Anzeigefläche (520) ausgeübte Belastung zu reduzieren.

5. Elektronische Vorrichtung nach Anspruch 1, wobei die Ausgangsleistung des Motors (1301) basierend auf einer zusätzlichen Betrachtung über mindestens eine von einer Temperatur und einer Formänderung der flexiblen Anzeige (130) bestimmt wird.

6. Elektronische Vorrichtung nach Anspruch 5, wobei die Ausgangsleistung kontinuierlich erhöht wird, während sich die Form der (2-2)-ten Fläche von der flachen Oberfläche zu der gekrümmten Oberfläche durch Bewegen in den geöffneten Zustand ändert.

7. Elektronische Vorrichtung nach Anspruch 5, wobei im Fall, dass sich die Form der (2-2)-ten Fläche zu der gekrümmten Oberfläche durch Bewegen in den geöffneten Zustand ändert, die Ausgangsleistung im Vergleich zu dem Fall erhöht ist, dass sich die Form der (2-2)-ten Fläche von der gekrümmten Oberfläche zu der flachen Oberfläche durch Bewegen in den geschlossenen Zustand ändert.

8. Elektronische Vorrichtung nach Anspruch 5, wobei die Ausgangsleistung gemäß der Temperatur der (2-2)-ten Fläche im Falle eines Bewegens in den geöffneten Zustand gesteuert wird und
die Ausgangsleistung gemäß der Temperatur der (2-1)-ten Fläche im Falle eines Bewegens in den geschlossenen Zustand gesteuert wird.

9. Elektronische Vorrichtung nach Anspruch 5, wobei im Fall, dass die Temperatur der zweiten Anzeigefläche gleich oder kleiner als eine spezifische Temperatur ist, die Ausgangsleistung erhöht wird, um eine Bewegungsgeschwindigkeit der flexiblen Anzeige (130) im Falle eines Bewegens in den geöffneten Zustand und den geschlossenen Zustand konstant zu machen, oder die Ausgangsleistung verringert wird, um die auf die zweite Anzeigefläche (520) ausgeübte Belastung zu reduzieren.

10. Elektronische Vorrichtung nach Anspruch 5, wobei die Ausgangsleistung in mindestens einem von einem Fall, in dem sich ein Abschnitt der zweiten Anzeigefläche (520) von der flachen Oberfläche zu der gekrümmten Oberfläche ändert, einem Fall, in dem die Temperatur der flexiblen Anzeige (130) gleich oder kleiner als eine spezifische Temperatur ist, und einem Fall, in dem die Eins-Zustand-Haltezeit der flexiblen Anzeige (130) größer oder gleich einer vorbestimmten Zeitdauer ist, schrittweise erhöht wird.

11. Elektronische Vorrichtung nach Anspruch 1, wobei das Stützelement (140) als eine segmentierte Struktur ausgebildet ist und dazu konfiguriert ist, die flexible Anzeige (130) zu stützen, damit sie im Anschluss an eine Drehung der Rolle (155) bewegbar ist.

12. Elektronische Vorrichtung nach Anspruch 11, wobei das Stützelement (140) einen vorbestimmten Spalt mit der flexiblen Anzeige (130) ausbildet und einen vorbestimmten Spalt mit einer Mehrstabanordnung (142) ausbildet, die dazu konfiguriert ist, das Stützelement (140) zu bewegen, sodass das Stützelement (140) flexibel zwischen der flexiblen Anzeige (130) und der Mehrstabanordnung (142) bewegbar ist.

## Revendications

1. Dispositif électronique comprenant :
un premier boîtier (110) ;
un second boîtier (120) conçu pour recevoir au moins une partie du premier boîtier (110) et pour guider un mouvement coulissant du premier boîtier (110) ;
un affichage flexible (130) comprenant une première zone d'affichage (510) reliée au premier boîtier (110) et une seconde zone d'affichage (520) s'étendant à partir de la première zone d'affichage (510) et au moins partiellement reçue à l'intérieur du second boîtier (120) ou exposée visuellement à l'extérieur de celui-ci selon le mouvement coulissant du premier boîtier (110) ;
un rouleau (155) disposé à l'intérieur du second boîtier (120) et conçu pour déplacer l'affichage flexible (130), amenant le dispositif électronique à un état ouvert ou fermé, et pour guider la seconde zone d'affichage (520) lorsque l'affichage flexible (130) est déplacé ;
un moteur (1301) conçu pour faire tourner le rouleau (155) ; et
un élément de support (140) conçu pour supporter au moins une partie de l'affichage flexible (130) dans la seconde zone d'affichage (520),
**caractérisé en ce que** :
le moteur (1301) est conçu de sorte qu'une sortie du moteur (1301) est déterminée selon un temps de maintien à un état de l'affichage flexible (130), le temps de maintien à un état étant la durée pendant laquelle le dispositif électronique a été laissé dans l'état ouvert, l'état fermé ou l'état où l'affichage flexible a été arrêté en un point lors d'un déplacement entre l'état fermé et l'état ouvert.

2. Dispositif électronique de la revendication 1, dans lequel la seconde zone d'affichage (520) comprend une (2-1)^{e} zone et une (2-2)^{e} zone qui est reliée à la (2-1)^{e} zone, à l'état ouvert,
la zone (2-1)^{e} forme une surface plate et la (2-2)^{e} zone forme une surface courbe, et
à l'état fermé,
la zone (2-1)^{e} forme une surface courbe et la (2-2)^{e} zone forme une surface plate.

3. Dispositif électronique de la revendication 2, dans lequel la sortie augmente de manière continue à mesure que le temps de maintien à un état augmente.

4. Dispositif électronique de la revendication 2, dans lequel, dans le cas où le temps de maintien à un état de la seconde zone d'affichage (520) dépasse une période de temps prédéterminée, la sortie est augmentée pour maintenir la vitesse de déplacement de l'affichage flexible (130) constante ou la sortie est réduite pour réduire la contrainte appliquée à la seconde zone d'affichage (520).

5. Dispositif électronique de la revendication 1, dans lequel la sortie du moteur (1301) est déterminée sur la base d'une considération supplémentaire concernant au moins l'un d'une température et d'un changement de forme de l'affichage flexible (130).

6. Dispositif électronique de la revendication 5, dans lequel la sortie est augmentée en continu tandis que la forme de la (2-2)^{e} zone change de la surface plate à la surface incurvée en se déplaçant vers l'état ouvert.

7. Dispositif électronique de la revendication 5, dans lequel, dans le cas où la forme de la (2-2)^{e} zone change vers la surface incurvée en se déplaçant vers l'état ouvert, la sortie est augmentée par rapport au cas où la forme de la (2-2)^{e} zone change de la surface incurvée à la surface plate en se déplaçant vers l'état fermé.

8. Dispositif électronique de la revendication 5, dans lequel la sortie est commandée selon la température de la (2-2)^{e} zone en cas de déplacement vers l'état ouvert, et
la sortie est commandée selon la température de la (2-1)^{e} zone en cas de déplacement vers l'état fermé.

9. Dispositif électronique de la revendication 5, dans lequel, dans le cas où la température de la seconde zone d'affichage est égale ou inférieure à une température spécifique, la sortie est augmentée afin de rendre une vitesse de déplacement de l'affichage flexible (130) constante en cas de déplacement vers l'état ouvert et l'état fermé, ou la sortie est réduite afin de réduire la contrainte appliquée à la seconde zone d'affichage (520).

10. Dispositif électronique de la revendication 5, dans lequel la sortie est progressivement augmentée dans au moins l'un d'un cas où une partie de la seconde zone d'affichage (520) change de la surface plate à la surface incurvée, d'un cas où la température de l'affichage flexible (130) est égale ou inférieure à une température spécifique, et d'un cas où le temps de maintien à un état de l'affichage flexible (130) est supérieur ou égal à une période de temps prédéterminée.

11. Dispositif électronique de la revendication 1, dans lequel l'élément de support (140) est formé en tant que structure segmentée et est conçu pour supporter l'affichage flexible (130) pour être mobile après une rotation du rouleau (155).

12. Dispositif électronique de la revendication 11, dans lequel l'élément de support (140) forme un espace prédéterminé avec l'affichage flexible (130) et forme un espace prédéterminé avec un ensemble de barres multiples (142) conçu pour déplacer l'élément de support (140) de sorte que l'élément de support (140) est mobile de manière flexible entre l'affichage flexible (130) et l'ensemble de barres multiples (142).
